Europäisches Patentamt

European Patent Office

Office européen des brevets

(19)

(11) Numéro de publication : **0 105 298**
**B1**

(12) # FASCICULE DE BREVET EUROPÉEN

(45) Date de publication du fascicule du brevet :
20.08.86

(51) Int. Cl.⁴ : **G 01 F 23/28**

(21) Numéro de dépôt : 83901082.4

(22) Date de dépôt : 08.04.83

(86) Numéro de dépôt international :
**PCT/FR 83/00065**

(87) Numéro de publication internationale :
**WO/8303670 (27.10.83 Gazette 83/25)**

(54) **DISPOSITIF POUR DETECTER LE NIVEAU D'UN LIQUIDE DANS UN RESERVOIR, NOTAMMENT D'UN GAZ LIQUEFIE DANS UN RESERVOIR DE BRIQUET, ET RESERVOIR EQUIPE D'UN TEL DISPOSITIF.**

(30) Priorité : 08.04.82 FR 8206140

(43) Date de publication de la demande :
18.04.84 Bulletin 84/16

(45) Mention de la délivrance du brevet :
20.08.86 Bulletin 86/34

(84) Etats contractants désignés :
AT DE FR GB NL

(56) Documents cités :
FR-A- 1 458 471
FR-A- 2 057 913
US-A- 3 727 242
IBM Technical Disclosure Bulletin, volume 24, No. 2, July 1981, New York (US) O. Gupta et al.: "Optical Liquid Level Sensor"

(73) Titulaire : **S.T. DUPONT Société anonyme dite:**
**Tour Maine-Montparnasse 33, avenue du Maine**
**F-75755 Paris Cedex 15 (FR)**

(72) Inventeur : **GROSSIORD, Claude**
**88, Avenue de la Plaine**
**F-74000 Annecy (FR)**

(74) Mandataire : **Jolly, Jean-Pierre et al**
**Cabinet BROT et JOLLY 83, rue d'Amsterdam**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Description

La présente invention a pour objet un dispositif permettant de détecter le niveau d'un liquide dans un réservoir, et notamment d'un gaz liquéfié dans un réservoir de briquet. C'est à cette application particulière que l'on se référera ci-après de façon détaillée, mais il apparaîtra clairement à l'homme de l'art que l'invention s'étend à tout autre réservoir de liquide.

La plupart des briquets à gaz pour fumeurs ne comportent aucun dispositif donnant à l'utilisateur des indications sur la quantité de gaz restant dans le réservoir. On connaît, bien entendu, des briquets dont le corps transparent ou translucide permet de distinguer le niveau de gaz liquéfié. Mais, outre le fait que ces briquets sont en général de qualité médiocre, le contrôle du niveau du gaz est habituellement malaisé car il impose à l'utilisateur d'incliner le briquet pour distinguer clairement la ligne de raccordement de la surface libre du liquide sur la paroi du corps de briquet.

On a également proposé d'utiliser des dispositifs optiques, qui, disposés dans le fond d'un réservoir, laissent apparaître une pastille colorée tant que le briquet contient du gaz, cette pastille disparaissant lorsque le réservoir est vide. Cependant, la faible luminosité du signal transmis et la nécessité pour l'utilisateur de réaliser son observation sous un angle très proche de l'axe du système ont fait abandonner ce type de dispositif.

Par le brevet FR-A-2 057 913, on connaît également, dans un domaine technique différent, un autre type de dispositif pour repérer le niveau d'un liquide dans un récipient. Ce dispositif comprend un barreau de matière transparente, dont une extrémité en forme de cône, d'angle au sommet égal à 90°, peut être immergée ou non suivant le niveau du liquide dans le récipient. L'indice de réfraction du barreau est choisi, par rapport à celui du liquide, de façon que, lorsque son extrémité baigne dans le liquide, les rayons lumineux incidents transmis par la matière transparente se réfractent à l'interface séparant cette matière du liquide et se perdent dans le liquide, et que, lorsque cette extrémité n'est pas immergée, les rayons lumineux incidents subissent une double réflexion totale en rencontrant à deux reprises ladite interface et sont renvoyés vers l'autre extrémité du barreau. Dans le premier cas, l'utilisateur aperçoit une partie sombre qui est, en fait, le fond du réservoir, et dans le second cas, il aperçoit une partie plus claire. Il peut savoir ainsi si le niveau du liquide est situé au-dessus ou au-dessous de l'extrémité du barreau transparent.

Dans le but de rendre possible la lecture à distance de ce genre de dispositif, il est prévu dans ce brevet d'associer au barreau de matière transparente un faisceau de fibres conductrices de la lumière appelées par la suite fibres optiques. Celles-ci véhiculent le signal de lecture depuis le lieu de la mesure jusqu'au lieu de l'observation. Cependant, ces dispositifs en raison de la faible luminosité de leur signal, sont généralement extrêmement difficiles à lire.

Pour remédier à cet inconvénient, le document « Optical Liquid Level Sensor », IBM Technical Disclosure Bulletin, volume 24, numéro 2, Juillet 1981, New York (US) propose un dispositif de détection selon le préambule de la revendication 1. Les trajets des rayons lumineux incidents et réfléchis sont séparés en deux faisceaux de fibres optiques distincts. Ainsi, une source lumineuse éclaire le barreau transparent par un premier faisceau de fibres optiques, et, après réflexion, les rayons lumineux retournent à l'observateur par un second faisceau de fibres optiques.

Si ce genre de dispositif, du fait de sa bonne luminosité, se révèle extrêmement précis et facile à lire, il n'est cependant guère utilisable que dans le cas où il est possible de disposer d'une source lumineuse et où les problèmes d'encombrement ne sont pas critiques. Tel n'est pas le cas lorsque l'on désire équiper de ce dispositif un réservoir de dimensions réduites, tel que par exemple celui d'un briquet.

L'invention vise à proposer un dispositif de détection du niveau d'un liquide à l'intérieur d'un récipient dont la lecture soit à la fois facile et sûre, ledit dispositif étant suffisamment miniaturisable pour être monté sur un réservoir de petite dimension, par exemple un réservoir de briquet.

Elle a pour objet un dispositif de détection du niveau d'un liquide dans un réservoir, du type susmentionné et qui se caractérise en ce que l'élément dioptrique est tel que, lorsqu'il est immergé dans le liquide, la partie desdits rayons lumineux rencontrant lesdites faces de l'élément dioptrique est substantiellement absorbée par le liquide, tandis que, lorsqu'il n'est pas immergé dans le liquide, ladite partie des rayons lumineux est substantiellement réfléchie sur lesdites faces, et en ce que la première extrémité du faisceau correspondant à la face d'observation du niveau de liquide, est disposée de façon visible de l'extérieur du réservoir et est partagée en deux zones, à savoir une zone signal susceptible de recevoir desdites faces de l'élément dioptrique à travers une première région de la deuxième extrémité du faisceau, une quantité de lumière correspondant à ladite partie des rayons lumineux réfléchie et traversant le faisceau dans l'autre sens, et une zone témoin susceptible de recevoir d'une deuxième région de la deuxième extrémité du faisceau une quantité de lumière constante, que l'élément dioptrique soit ou non immergé.

Elle a aussi pour objet un réservoir comme proposé dans la revendication 12.

Selon un mode de réalisation de l'invention, l'élément dioptrique comporte une base qui occupe une partie seulement de la deuxième extrémité du faisceau de fibres optiques. Ainsi, seuls les rayons lumineux conduits par ladite partie des fibres en regard de l'élément dioptrique pourront subir une réflexion totale avant de sortir du faisceau par la face d'observation, en rendant celle-ci lumineuse, alors que ceux conduits par les autres fibres iront se perdre à l'intérieur du réservoir, ce qui se traduira par une zone de référence sombre. Ceci permet de lever toute ambiguïté sur la détection du signal, car l'œil est capable de détecter toute différence de luminosité, si petite soit-elle, qui existe entre la zone signal et la zone témoin.

Le contraste existant entre la zone lumineuse de détection et la zone de référence peut d'ailleurs être amélioré éventuellement en colorant l'élément dioptrique et, par conséquent, le faisceau lumineux réfléchi correspondant.

La transmission des rayons réfléchis est améliorée par la présence d'un liquide entre l'extrémité du faisceau de fibres optiques et l'élément dioptrique, ce liquide devant avoir un indice de réfraction voisin de celui de ces deux éléments. Dans une variante de réalisation de l'invention, ce liquide sera remplacé par une colle d'indice de réfraction approprié qui, en plus de son rôle de maintien mécanique, assurera la continuité optique entre les deux éléments transparents.

Dans une variante de réalisation intéressante de l'invention, l'élément dioptrique sera placé dans une cavité du fond du réservoir. En choisissant le volume de celle-ci on pourra fixer le nombre d'allumages pouvant encore être fournis par un briquet après l'apparition ou la disparition de deux zones d'éclairement différent sur la face d'observation.

Cette cavité pourra avoir une section semi-sphérique et l'élément dioptrique pourra être placé sensiblement au centre de celle-ci. De cette façon, la lecture ne sera pas perturbée dans le cas où le briquet n'est pas tenu en position rigoureusement verticale.

Les dessins annexés illustrent diverses formes de mise en œuvre de l'invention. Sur ces dessins :

La figure 1 est une vue en coupe d'une première forme de réalisation du dispositif ;

La figure 2 est une vue en coupe partielle d'un briquet en position retournée, équipé d'un dispositif selon la figure 1 ;

Les figures 3 et 4 représentent la face d'observation perçue par l'utilisateur, respectivement lorsque l'élément dioptrique n'est pas immergé et lorsqu'il est immergé ;

Les figures 5 et 6 montrent schématiquement le trajet des rayons lumineux dans le cas où l'élément dioptrique n'est pas et est immergé respectivement ;

La figure 7 montre un second mode de réalisation du dispositif ;

Les figures 8 et 9 illustrent respectivement le trajet des rayons lumineux dans le dispositif de la figure 7, dans le cas où l'élément dioptrique n'est pas et est immergé respectivement ;

Les figures 10 et 11 représentent la face d'observation perçue dans les cas des figures 8 et 9 respectivement ;

La figure 12 montre une troisième forme de réalisation du dispositif selon l'invention ;

Les figures 13 et 14 représentent respectivement la face d'observation perçue dans le cas où l'élément dioptrique n'est pas et est immergé ;

Les figures 15 et 16 montrent respectivement un quatrième mode de réalisation du dispositif et la face d'observation perçue ;

Les figures 17, 18 et 19 représentent respectivement un cinquième mode de réalisation du dispositif, une vue de dessous du dispositif et la face d'observation perçue ;

Les figures 20 à 23 représentent respectivement une vue en coupe d'un sixième mode de réalisation du dispositif, une vue en élévation du dispositif, une vue de dessous, et la face d'observation perçue ;

Les figures 24 et 25 montrent respectivement un septième mode de réalisation du dispositif et la face d'observation perçue ; et

La figure 26 est une vue en coupe partielle du dispositif disposé dans une cavité du réservoir.

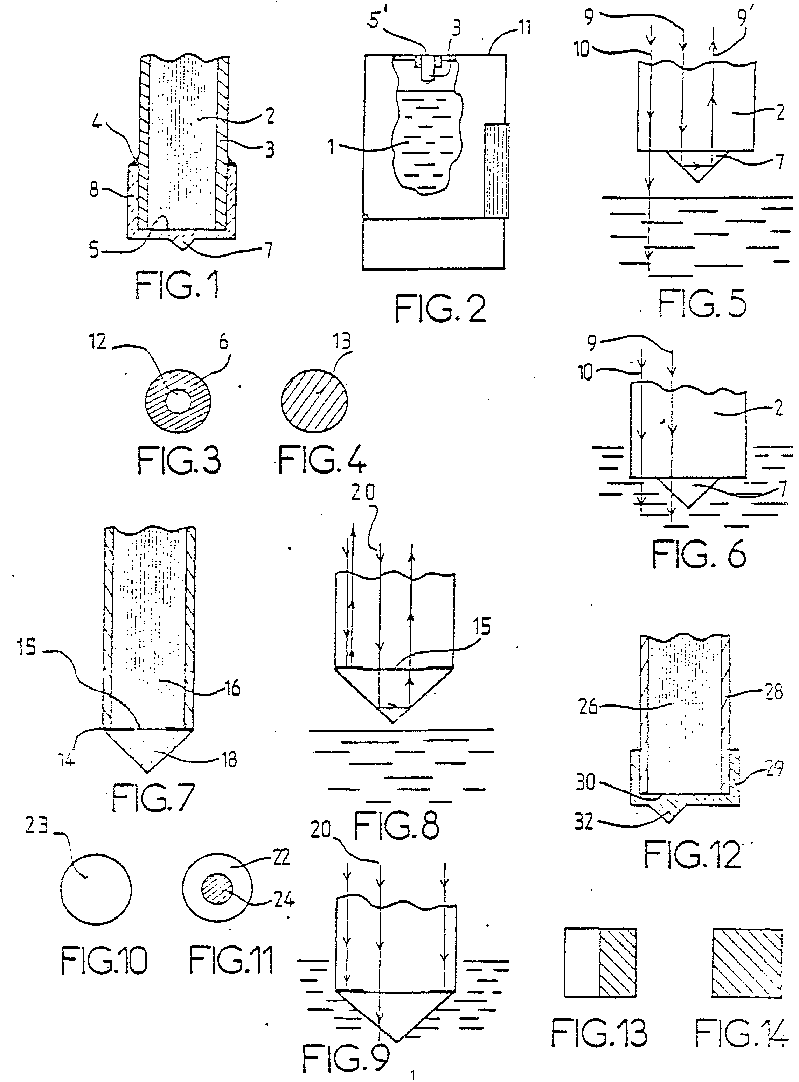

Conformément à l'invention, sur les figures 1 à 6, le réservoir 1 d'un briquet est muni d'un dispositif permettant à l'utilisateur de détecter si le gaz est situé au-dessus ou au-dessous d'un niveau donné, et ainsi de contrôler le bon remplissage du briquet.

Ce dispositif est constitué d'un faisceau 2 de fibres optiques, logé dans une gaine rigide 3 dont une extrémité 5 disposée dans le réservoir, sensiblement au niveau à détecter, est munie d'un élément dioptrique 7, tandis que son autre extrémité 5' est fixée sur le fond 11 du briquet. Cette fixation peut être réalisée par tout moyen connu dans la technique. L'élément dioptrique est constitué par un cône 7, formé, par exemple par moulage, sur un bouchon 8 de « Plexiglas » (marque déposée) coiffant l'extrémité du faisceau de fibres 2 et de la gaine rigide 3. Il est collé sur les parois latérales de celle-ci et un joint d'élastomère 4 prévient le passage de liquide entre les deux pièces. Le diamètre de base de l'élément 7 est d'environ la moitié de celui du faisceau de fibres. Ainsi, lorsque le cône 7 n'est pas immergé (fig. 5), les rayons lumineux arrivant par les fibres 9 situées au droit du cône 7 subissent une double réflexion totale sur les faces à 90° de celui-ci, et ressortent par les fibres 9'. Les rayons lumineux véhiculés par les fibres 10 de la périphérie du faisceau ne rencontrent pas le cône 7 et ne subissent ainsi aucune réflexion totale. Ils ne sont donc pas déviés et se perdent à l'intérieur du réservoir du briquet.

L'utilisateur observant la section droite 5' du faisceau de fibres optiques située à l'extérieur du briquet et dénommée ci-après face d'observation, distinguera deux zones de luminosités différentes (fig. 3) : une zone annulaire 6 sombre correspondant aux fibres véhiculant les rayons lumineux n'ayant pas subi de réflexion totale, et une zone circulaire centrale 12 plus lumineuse correspondant aux fibres véhiculant les rayons lumineux réfléchis par le cône 7.

Par contre, lorsque le cône 7 est immergé (fig. 6), les rayons 9 et 10 ne subissent pas de réflexion totale et se perdent dans le réservoir du briquet. La surface d'observation 13 apparaît alors uniformément sombre (fig. 4).

Ainsi, le contraste existant entre la zone annulaire 6 et la zone centrale 12, lorsque le cône 7 n'est pas immergé, est aisé à identifier par l'utilisateur.

La zone témoin n'est pas forcément la zone la plus sombre. Ainsi sur les figures 7 à 11 une rondelle mince réfléchissante 14 est collée à l'extrémité 16 du faisceau de fibres. L'élément dioptrique constitué d'un cône en verre 18 est fixé, par exemple à l'aide d'un produit adhésif sur ladite rondelle 14. Comme montré sur les schémas de principe des figures 8 et 9, seuls les rayons lumineux 20 véhiculés par les fibres situées au droit de l'ouverture 15 de la rondelle 14 seront susceptibles, lorsque le cône 18 sera immergé (figure 9), de se perdre dans le liquide et donc de ne pas être réfléchis vers la face d'observation.

Ainsi, lorsque le cône 18 sera immergé (figure 9), l'utilisateur pourra voir (figure 11) une face d'observation constituée d'un disque foncé 24 entouré d'une couronne claire 22 et lorsque le cône ne sera pas immergé (figure 8), il pourra voir une face d'observation 23 uniformément claire (figure 10).

On pourrait naturellement inverser la luminosité du disque et de la couronne en retirant la rondelle 14 et en disposant sur l'ouverture 15 un disque réfléchissant. Ou encore, on pourrait interposer un disque absorbant entre le faisceau de fibres optiques et l'élément dioptrique sur ladite deuxième région.

Bien entendu, le faisceau de fibres et l'élément dioptrique utilisés pourront avoir une section autre que circulaire.

Sur les figures 12 à 14, le faisceau de fibres 26 est maintenu par un tube 28 de section carrée. Un bouchon 29 de même section, en un matériau transparent, est fixé à son extrémité 30. Il est pourvu d'un élément dioptrique constitué d'un prisme 32, dont la base occupe environ la moitié de la surface de base du faisceau de fibres.

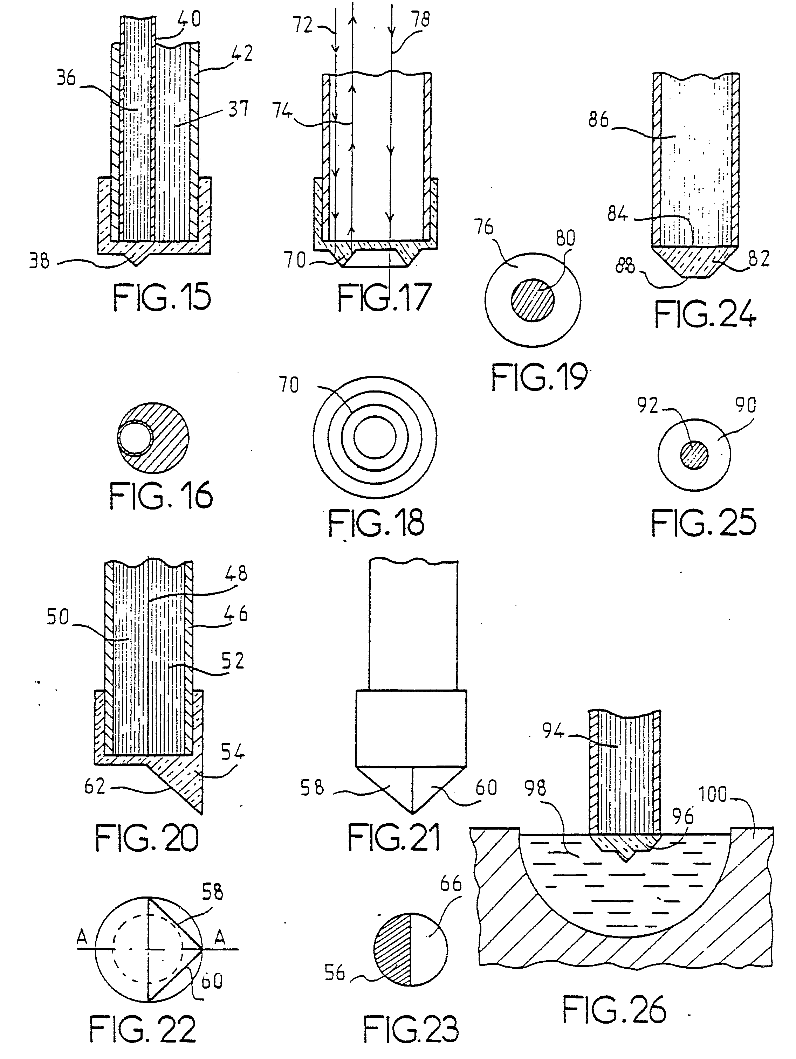

Ainsi, lorsque le prisme 32 est respectivement non immergé et immergé, l'utilisateur voit la face d'observation prendre l'aspect des figures 13 et 14.

Dans les réalisations précédentes, les zones apparaissant sur la face d'observation supposent que les fibres optiques constituant le faisceau soient parfaitement arrangées, de manière à ce que deux fibres voisines sur la face d'observation le soient également sur la surface en contact avec l'élément dioptrique.

La réalisation représentée aux figures 15 et 16 permet de s'affranchir de cette contrainte et d'obtenir un signal optique d'une forme donnée, sans nécessiter un arrangement précis des fibres optiques. Pour cela, les fibres sont séparées en deux faisceaux distincts 36 et 37. Les fibres du faisceau 36 situées au droit de l'élément dioptrique 38 sont contenues dans un tube 40, disposé à l'intérieur de la gaine 42. On est sûr ainsi qu'aucune fibre ayant une extrémité au droit de l'élément dioptrique n'aura son autre extrémité dans la face d'observation, ce qui aurait pour effet de déformer le signal lumineux fourni. Lorsque l'élément dioptrique 38 n'est pas immergé, la face d'observation prend l'aspect de la figure 16, et est sombre dans le cas contraire.

Sur les figures 20 à 23, les fibres contenues dans le tube 46 sont séparées par une cloison axiale 48 en deux faisceaux 50 et 52. L'élément dioptrique 54 est constitué d'un prisme dont les deux faces latérales 58 et 60 sont parallèles à l'axe des fibres et forment entre elles un angle de 90°, et dont la troisième face 62 forme un angle de 45° avec l'axe des fibres.

Les rayons lumineux transmis par les fibres du faisceau 50 iront ainsi se perdre dans tous les cas à l'intérieur du réservoir et cela se traduira donc par une zone sombre 56 de forme semi-circulaire sur la face d'observation (fig. 23). Quant aux rayons lumineux transmis par les fibres du faisceau 52, ils subiront, lorsque l'élément dioptrique 54 ne sera pas immergé, plusieurs réflexions totales : une première sur la face 62, une seconde sur la face 58 (ou sur la face 60 suivant que le rayon incident sera d'un côté ou de l'autre de la ligne A-A), une troisième sur la face 60 (ou la face 58) et enfin une quatrième sur la face 62, pour être de nouveau transmis par le faisceau 52 jusqu'à la face d'observation où ils formeront une zone lumineuse semi-circulaire 66.

Sur les figures 17 à 19, l'élément dioptrique est constitué d'un anneau de section triangulaire 70 à angle au sommet de 90°. Lorsqu'il n'est pas immergé les rayons incidents 72 arrivant au droit de l'élément dioptrique subissent une double réflexion totale et sont réfléchis suivant 74 vers la face d'observation. Sur celle-ci, il leur correspondra une zone annulaire claire 76 (fig. 19). Par contre, les rayons incidents centraux 78 ne subissent aucune réflexion et se perdent à l'intérieur du réservoir du briquet. Il leur correspondra donc sur la face d'observation un disque central sombre 80.

Dans le mode de réalisation des figures 24 et 25, l'élément dioptrique est constitué d'un tronc de cône 82. Un film de colle 84 assure sa liaison mécanique avec le faisceau de fibres optiques 86 et la continuité optique des deux milieux transparents. On choisira avantageusement une colle qui possède un indice de réfraction voisin de celui des fibres optiques 86 et de l'élément dioptrique 82.

Lorsque l'élément dioptrique n'est pas immergé, seuls les rayons lumineux arrivant au droit de la petite base 88 du tronc de cône 82 se perdent dans le réservoir, les autres subissant une double réflexion totale pour ressortir par la face d'observation. Celle-ci se présentera donc (fig. 25) sous la forme d'un anneau clair 90 entourant un disque foncé 92.

Sur la figure 26, l'extrémité d'un faisceau de fibres 94 pourvue d'un élément dioptrique 96 est engagée dans une cavité 98 prévue dans le fond 100 du réservoir du briquet. Une telle disposition permet, en jouant sur les dimensions de cette cavité 98, ainsi que sur la distance de l'élément dioptrique au fond de la cavité, de déterminer le nombre d'allumages restant à l'utilisateur après l'apparition ou la disparition de deux zones d'éclairement différent sur la face d'observation. Cette cavité pourra avoir une section semi-sphérique et l'élément dioptrique 96 sera sensiblement placé en son centre. De cette façon, la lecture ne sera pas perturbée si le briquet n'est pas tenu en position rigoureusement verticale.

Les exemples ci-dessus se rapportent au cas d'un réservoir à gaz liquéfié de briquet à gaz, car cette application est très avantageuse, en raison de l'aptitude à la miniaturisation que présente le dispositif conforme à l'invention. Ces exemples et cette application n'ont bien entendu aucun caractère limitatif et l'homme de l'art pourra concevoir bien d'autres applications à d'autres types de réservoir sans sortir du cadre de la présente invention.

C'est ainsi, par exemple, comme il a été indiqué ci-dessus, que le dispositif selon l'invention pourra être utilisé avec avantage pour détecter un niveau critique de remplissage d'une cuve à mazout, notamment d'une cuve enterrée. Dans ce cas, l'extrémité libre du faisceau de fibres servant de face d'observation pourra, bien entendu, ne pas être solidaire de la cuve, mais être disposée en un emplacement facilement accessible à l'utilisateur.

**Revendications**

1. Dispositif de détection de niveau d'un liquide dans un réservoir (1), comportant :
uñ faisceau de fibres optiques (2, 16, 26, 36, 37, 50, 52, 86, 94) ayant une première extrémité (5') recevant des rayons lumineux (9, 10, 20, 72, 78) provenant de l'extérieur du réservoir et une deuxième extrémité (5, 15, 30, 84) plane de laquelle émergent les rayons lumineux après que ceux-ci aient traversé dans un premier sens ledit faisceau et
un élément dioptrique (7, 18, 32, 38, 54, 70, 82) à faces réfléchissantes (58, 60) disposé sur ladite deuxième extrémité, susceptible d'être immergé dans le liquide, caractérisé en ce que ledit élément dioptrique est tel que, lorsqu'il est immergé dans le liquide, la partie desdits rayons lumineux rencontrant lesdites faces de l'élément dioptrique est substantiellement absorbée par le liquide, tandis que lorsqu'il n'est pas immergé dans le liquide, ladite partie des rayons lumineux est substantiellement réfléchie sur lesdites faces, et en ce que la première extrémité (5') du faisceau correspondant à la face d'observation du niveau de liquide, est disposée de façon visible de l'extérieur du réservoir (1) et est partagée en deux zones, à savoir une zone signal (12, 24, 76, 90, 66) susceptible de recevoir desdites faces de l'élément dioptrique (7, 18, 32, 38, 54, 70, 82), à travers une première région de la deuxième extrémité du faisceau, une quantité de lumière correspondant à ladite partie des rayons lumineux réfléchie et traversant le faisceau dans l'autre sens, et une zone témoin (6, 22, 80, 92, 56) susceptible de recevoir d'une deuxième région de la deuxième extrémité du faisceau une quantité de lumière constante, que l'élément dioptrique soit ou non immergé.

2. Dispositif selon la revendication 1, caractérisé en ce que l'élément dioptrique (7, 32, 38, 54, 70) comporte une base qui occupe une partie seulement de la deuxième extrémité du faisceau de fibres optiques (2, 26, 36, 37, 50, 52).

3. Dispositif selon la revendication 2, caractérisé en ce que la base de l'élément dioptrique (7) occupe la partie centrale de ladite deuxième extrémité du faisceau de fibres optiques.

4. Dispositif suivant la revendication 2, caractérisé en ce que la base de l'élément dioptrique (32, 38, 54) est décalée par rapport à l'axe du faisceau de fibres optiques.

5. Dispositif selon l'une des revendications précédentes, caractérisé en ce qu'un produit (84) d'indice de réfraction voisin de celui-ci du verre est interposé entre le faisceau de fibres optiques (86) et l'élément dioptrique (82), de façon à assurer la continuité optique de ces deux éléments.

6. Dispositif selon la revendication 5, caractérisé en ce que le susdit produit est une colle.

7. Dispositif suivant l'une des revendications précédentes, caractérisé en ce qu'un écran réfléchissant (14) est interposé entre le faisceau de fibres optiques (16) et l'élément dioptrique (18) sur la deuxième région de la deuxième extrémité du faisceau.

8. Dispositif suivant l'une des revendications précédentes, caractérisé en ce qu'un écran absorbant est interposé entre le faisceau de fibres optiques et l'élément dioptrique sur la deuxième région de la deuxième extrémité du faisceau.

9. Dispositif suivant la revendication 1, caractérisé en ce que ledit faisceau de fibres optiques est divisé en deux faisceaux élémentaires (36, 37, 50, 52) par un moyen de cloisonnement (40, 48) et en ce que l'élément dioptrique (38, 54) comporte une base qui coïncide avec la deuxième extrémité de l'un desdits faisceaux élémentaires.

10. Dispositif suivant l'une des revendications précédentes, caractérisé en ce que l'élément dioptrique est un prisme (32, 34) à réflexion totale.

11. Dispositif suivant l'une des revendications précédentes caractérisé en ce que ledit élément dioptrique est un cône (7, 18, 38) ou tronc de cône (82) à réflexion totale.

12. Réservoir, notamment pour briquet à gaz, équipé d'un dispositif conforme à l'une des revendications 1 à 11.

13. Réservoir selon la revendication 12, caractérisé en ce que son fond présente une cavité (98) dans laquelle sont engagés la deuxième extrémité du faisceau de fibres optiques (94) et l'élément dioptrique (96) dont elle est équipée.

**Claims**

1. A device for detecting the level of a liquid in a tank (1) comprising :

a bundle of optical fibres (2 ; 16 ; 26 ; 36 ; 37 ; 50 ; 52 ; 86 ; 94) having a first end (5') receiving light rays (9, 10 ; 20 ; 72 ; 78) from the outside of the tank and a second flat end (5 ; 15 ; 30 ; 84) from which the light rays emerge after they have passed through said bundle in a first direction, and

a dioptric element (7 ; 18 ; 32 ; 38 ; 54 ; 70 ; 82) having reflecting faces (58, 60) and disposed on said second end and capable of being immersed in the liquid, characterised in that said dioptric element is such that, when it is immersed in the liquid, the part of said light rays meeting said faces of the dioptric element is substantially absorbed by the liquid while when it is not immersed in the liquid, said part of the light rays is substantially reflected at said faces, and that the first end (5') of the bundle corresponding to the face for observation of the level of liquid is disposed visibly from the outside of the tank (1) and is divided into two zones, namely a signal zone (12 ; 24 ; 76 ; 90 ; 66) capable of receiving from said faces of the dioptric element (7 ; 18 ; 32 ; 38 ; 54 ; 70 ; 82), through a first region of the second end of the bundle, an amount of light corresponding to said part of the light rays which is reflected and passing through the bundle in the other direction, and a reference zone (6, 22, 80, 92, 56) capable of receiving from a second region of the second end of the bundle a constant amount of light irrespective of whether the dioptric element is or is not immersed.

2. A device according to claim 1 characterised in that the dioptric element (7 ; 32 ; 38 ; 54 ; 70) comprises a base which occupies a part only of the second end of the bundle of optical fibres (2 ; 26 ; 36, 37 ; 50 ; 52).

3. A device according to claim 2 characterised in that the base of the dioptric element (7) occupies the central part of said second end of the bundle of optical fibres.

4. A device according to claim 2 characterised in that the base of the dioptric element (32 ; 38 ; 54) is offset with respect to the axis of the bundle of optical fibres.

5. A device according to one of the preceding claims characterised in that a product (84) with a refractive index close to that of glass is interposed between the bundle of optical fibres (86) and the dioptric element (82) so as to provide for optical continuity of said two elements.

6. A device according to claim 5 characterised in that said product is a glue.

7. A device according to one of the preceding claims characterised in that a reflecting screen (14) is interposed between the bundle (16) of optical fibres and the dioptric element on the second region of the second end of the bundle.

8. A device according to one of the preceding claims characterised in that an absorbent screen is interposed between the bundle of optical fibres and the dioptric element on the second region of the second end of the bundle.

9. A device according to claim 1 characterised in that said bundle of optical fibres is divided into two elementary bundles (36, 37 ; 50, 52) by a partitioning means (40 ; 48) and that the dioptric element (38, 54) comprises a base which coincides with the second end of one of said elementary bundles.

10. A device according to one of the preceding claims characterised in that the dioptric element is a prism (32, 34) providing for total reflection.

11. A device according to one of the preceding claims characterised in that said dioptric element is a cone (7 ; 18 ; 38) or truncated cone (82) providing for total reflection.

12. A tank in particular for a gas lighter, fitted with a device according to one of claims 1 to 11.

13. A tank according to claim 12 characterised in that the bottom thereof has a cavity (98) into which are engaged the second end of the bundle of optical fibres (94) and the dioptric element (96) with which it is fitted.

## Patentansprüche

1. Einrichtung zur Bestimmung des Niveaus einer Flüssigkeit in einem Behälter (1) mit :

einem Bündel optischer Fasern (2 ; 16 ; 26 ; 36 ; 37 ; 50 ; 52 ; 86 ; 94) mit einem ersten Ende (5'), das von außerhalb des Behälters stammende Lichtstrahlen (9, 10 ; 20 ; 72, 78) empfängt, und einem zweiten ebenen Ende (5 ; 15 ; 30 ; 84), aus dem die Lichtstrahlen nach dem Durchdringen des Bündels in einer ersten Richtung austreten und

einem dioptrischen Element (7 ; 18 ; 32 ; 38 ; 54 ; 70 ; 82) mit reflektierenden Flächen (58, 60), welches an dem zweiten Ende angeordnet ist und zum Eintauchen in die Flüssigkeit geeignet ist, dadurch gekennzeichnet, daß das dioptrische Element derart ausgebildet ist, daß jener Anteil der Lichtstrahlen, welche auf die Flächen des dioptrischen Elementes treffen, im wesentlichen von der Flüssigkeit absorbiert wird, wenn das dioptrische Element in die Flüssigkeit eintaucht, und im wesentlichen an den Flächen reflektiert wird, wenn das Element nicht in die Flüssigkeit eintaucht, und daß das erste Ende (5') des Bündels, welches der Beobachtungsfläche des Niveaus der Flüssigkeit entspricht, an der Außenseite des Behälters (1) in sichtbarer Weise angeordnet ist und in zwei Zonen unterteilt ist, u. zw. eine Signalzone (12 ; 24 ; 76 ; 90 ; 66), die geeignet ist, von den Flächen des dioptrischen Elementes (7 ; 18 ; 32 ; 38 ; 54 ; 70 ; 82) durch einen ersten Bereich des zweiten Endes des Bündels eine Lichtmenge zu empfangen, die dem Anteil der reflektierten Lichtstrahlen entspricht, der das Bündel in der anderen Richtung durchdringt, und eine Vergleichszone (6, 22, 80, 92, 56), die geeignet ist, aus einem zweiten Bereich des zweiten Endes des Bündels eine konstante Lichtmenge zu empfangen, unabhängig davon, ob das dioptrische Element eingetaucht ist oder nicht.

2. Einrichtung nach Anspruch 1, dadurch gekennzeichnet, daß das dioptrische Element (7 ;

32 ; 38 ; 54 ; 70) eine Basis aufweist, die nur einen Teil des zweiten Endes des Bündels optischer Fasern (2 ; 26 ; 36, 37 ; 50, 52) einnimmt.

3. Einrichtung nach Anspruch 2, dadurch gekennzeichnet, daß die Basis des dioptrischen Elements (7) nur den mittleren Teil des zweiten Endes des Bündels optischer Fasern einnimmt.

4. Einrichtung nach Anspruch 2, dadurch gekennzeichnet, daß die Basis des dioptrischen Elements (32 ; 38 ; 54) bezüglich der Achse des Bündels optischer Fasern versetzt ist.

5. Einrichtung nach einem der vorhergehenden Ansprüche, dadurch gekennzeichnet, daß ein Material (84) mit einem ähnlichen Brechungsindex wie der des Glases zwischen das Bündel optischer Fasern (86) und das dioptrische Element (82) eingeschaltet ist, um die optische Kontinuität dieser beiden Elemente zu gewährleisten.

6. Einrichtung nach Anspruch 5, dadurch gekennzeichnet, daß dieses Material ein Leim ist.

7. Einrichtung nach einem der vorhergehenden Ansprüche, dadurch gekennzeichnet, daß ein reflektierender Schirm (14) zwischen dem Bündel optischer Fasern (16) und dem dioptrischen Element (18) im zweiten Bereich des zweiten Endes des Bündels angeordnet ist.

8. Einrichtung nach einem der vorhergehenden Ansprüche, dadurch gekennzeichnet, daß ein absorbierender Schirm zwischen dem Bündel optischer Fasern und dem dioptrischen Element im zweiten Bereich des zweiten Endes des Bündels angeordnet ist.

9. Einrichtung nach Anspruch 1, dadurch gekennzeichnet, daß das Bündel optischer Fasern durch eine Abtrennung (40, 48) in zwei Grundbündel (36, 37 ; 50, 52) unterteilt ist und daß das dioptrische Element (38, 54) eine Basis aufweist, die mit dem zweiten Ende eines der Grundbündel zusammenfällt.

10. Einrichtung nach einem der vorhergehenden Ansprüche, dadurch gekennzeichnet, daß das dioptrische Element ein totalreflektierendes Prisma (32, 34) ist.

11. Einrichtung nach einem der vorhergehenden Ansprüche, dadurch gekennzeichnet, daß das dioptrische Element ein totalreflektierender Kegel (7 ; 18 ; 38) oder Kegelstumpf (82) ist.

12. Behälter, insbesondere für Gasfeuerzeuge, welcher mit einer Einrichtung nach einem der Ansprüche 1 bis 11 ausgestattet ist.

13. Behälter nach Anspruch 12, dadurch gekennzeichnet, daß sein Boden eine Ausnehmung (98) aufweist, in welche das zweite Ende des Bündels optischer Fasern (94) und das dioptrische Element (96), mit welchem sie ausgestattet ist, eingefügt ist.

0 105 298

FIG.1    FIG.2    FIG.5

FIG.3    FIG.4    FIG.6

FIG.7    FIG.8    FIG.12

FIG.10    FIG.11    FIG.9    FIG.13    FIG.14

FIG.15

FIG.17

FIG.19

FIG.24

FIG.16

FIG.18

FIG.25

FIG.20

FIG.21

FIG.26

FIG.22

FIG.23